# FASCICULE DE BREVET EUROPEEN

(11) **EP 2 614 225 B1**
(45) Date de publication et mention de la délivrance du brevet: **29.04.2015**
(21) Numéro de dépôt: 11773053.1
(22) Date de dépôt: 08.09.2011
(51) Int. Cl.: F01D 25/24, F01D 21/04, E04C 3/04

(54) **TREILLIS HYPERSTATIQUE DE BIELLES**
HYPERSTATISCHER TRÄGER MIT PLEUELSTANGEN
HYPERSTATIC TRUSS COMPRISING CONNECTING RODS

(30) Priorité: 08.09.2010 FR 1057117
(43) Date de publication de la demande: 17.07.2013
(73) Titulaire: Snecma, 75015 Paris (FR)
(72) Inventeur: BELLABAL, François, Robert, F-77300 Fontainebleau (FR); VINCENT, Thomas, Alain, Christian, F-91120 Palaiseau (FR)
(74) Mandataire: Gevers France
(86) Numéro de dépôt international: PCT/FR2011/052059
(87) Numéro de publication internationale: WO 2012/032270

(56) Documents cités:
- EP-A1- 1 050 693
- WO-A1-2006/103372
- FR-A- 1 452 811
- GB-A- 2 242 711
- US-A- 2 744 722
- US-A1- 2006 253 057

## Description

La présente invention concerne le domaine des turboréacteurs à double flux comprenant notamment un conduit de flux secondaire allongé. Elle concerne tout moteur de ce type, fixé au fuselage de l'aéronef ou les moteurs militaires.

Un turboréacteur à double flux comprend une soufflante qui lorsqu'elle est à l'avant du moteur délivre un flux d'air comprimé qui est séparé en deux flux annulaires concentriques : un flux primaire et un flux secondaire entourant le flux primaire. Ce dernier est guidé vers la partie du moteur formant générateur de gaz et qui comprend des étages de compression, une chambre de combustion et une section de turbines par lesquelles la soufflante est entraînée. Le flux primaire contenant les gaz de combustion est ensuite éjecté dans une tuyère d'échappement. Le flux secondaire est redressé en aval de la soufflante et est lui-même éjecté. Dans les moteurs civils, il fournit l'essentiel de la poussée.

Dans une configuration, le flux secondaire est guidé dans un canal de soufflante qui s'étend autour du moteur entre la soufflante et la tuyère d'échappement du flux primaire. Il comprend deux parois coaxiales sensiblement cylindriques qui délimitent entre elles un espace annulaire. La paroi interne du canal de soufflante forme l'enveloppe du générateur de gaz. La paroi externe du canal de soufflante forme un conduit qui s'étend du plan des ailettes redresseurs jusqu'au niveau de la tuyère d'échappement. Le conduit externe du canal de soufflante est désigné dans le domaine par l'acronyme anglais OFD pour « outer fan duct ».

Le moteur peut être monté sous l'aile de l'aéronef ou bien le long de son fuselage, vers l'arrière notamment. Dans ce cas, le moteur comprend un canal de soufflante tel que décrit ci-dessus. Les attaches du moteur à l'aéronef sont situées au niveau de deux plans transversaux : un plan à l'amont passant par le carter structural avant que l'on désigne carter intermédiaire et un plan à l'aval passant par le carter structural aval que l'on désigne carter d'échappement.

Pour assurer la fixation à l'aval, dans le cas d'un montage sur le fuselage, on prévoit un anneau structural sur le conduit externe du canal de soufflante, OFD, cet anneau étant relié par des bras ou des bielles à la virole ou anneau extérieur du carter d'échappement. La demande de brevet EP 2 022 973 au nom de la demanderesse décrit un exemple de structure de conduit externe de canal de soufflante.

GB2242711 montre les caractéristiques techniques du préambule de la revendication indépendante 1.

La liaison entre les deux anneaux ci-dessus peut se présenter sous la forme de bras radiaux répartis tout autour de l'axe du moteur et fixés rigidement aux deux anneaux. La liaison peut se présenter aussi sous la forme de bielles inclinées par rapport à l'axe du moteur. Les bielles sont fixées aux deux anneaux par des attaches de types chapes et axe. Une telle attache est formée de deux chapes simples ou doubles, solidaires l'une de l'extrémité de la bielle l'autre de la paroi de l'anneau et traversées par un axe commun. Plus particulièrement, les bielles sont disposées par paires, les bielles de chaque paire étant tangentes à l'anneau du carter d'échappement tout en étant convergentes sur une attache de l'anneau du conduit externe du canal de soufflante.

Que la liaison soit formée de bras radiaux ou de bielles, elle est hyperstatique ; les efforts transitent ainsi par tous les bras ou bielles de façon déterminée par leurs rigidités relatives. Pour simplifier la présentation, par la suite on désignera par le terme de bielle aussi bien les bielles que les bras.

Le chemin des efforts de traction étant identique à celui des efforts de compression, les bielles selon l'art antérieur doivent être dimensionnées de manière à résister aussi bien aux efforts de traction qu'aux efforts de compression.

Dans les solutions de l'art antérieur, tous les éléments de la liaison : axes, chapes, bielles ou bras, sont dimensionnés pour résister mécaniquement aux efforts qui résulteraient du balourd engendré par la perte d'une aube de soufflante. Il s'agit de ne pas risquer de voir le moteur se décrocher si une telle situation critique devait survenir. La masse de l'ensemble formant la liaison est en conséquence élevée.

La présente invention a pour objet la réalisation d'un treillis hyperstatique de bielles appliqué à la suspension d'un anneau de carter de moteur à l'intérieur d'un autre anneau qui, tout en assurant la reprise des efforts qui seraient générés par une rupture d'aube de soufflante, permet de réduire la masse de l'ensemble par rapport aux solutions de l'art antérieur.

L'invention a également pour objet la réalisation d'une suspension de moteur qui n'est pas pénalisante sur le plan aérodynamique.
Pour parvenir à réaliser ces objectifs, la demanderesse a pris en considération ce qui suit.

La perte d'une aube de soufflante est susceptible de générer des efforts élevés à la fois de compression et de traction. La valeur de l'effort maximal de compression et celle de l'effort maximal de traction sont sensiblement identiques car l'effort de balourd tourne autour de l'axe au cours du temps et toutes les bielles seraient soumises successivement à des efforts de traction et de compression.

Lorsqu'il s'agit de dimensionner les bielles, leur résistance en traction étant meilleure qu'en compression, on vise généralement la résistance au flambage en compression. Il existe donc une inertie minimale requise de la section droite de la bielle. Pour répondre à cette contrainte, on peut augmenter le maître couple de la bielle, ce qui est pénalisant aérodynamiquement, ou bien augmenter l'aire de la section de la bielle, ce qui est pénalisant en terme de masse.

Par ailleurs dans la mesure où la bielle est disposée en travers de la veine d'air et crée une traînée importante, son profil doit aussi être optimisé aérodynamiquement. Il s'ensuit une contrainte s'ajoutant à celle de la tenue mécanique.

Les bielles répondant à ces exigences sont ainsi surdimensionnées pour ce qui concerne la résistance à la traction. La marge à la rupture en traction est supérieure à 200%.

C'est ainsi que l'invention portant sur un treillis hyperstatique de bielles, appliqué à la suspension d'un premier anneau, partie d'un carter de moteur, à l'intérieur d'un second anneau concentrique au premier anneau, les bielles étant fixées par une extrémité au premier anneau et par l'autre extrémité au second anneau, le treillis hyperstatique de bielles est caractérisé par le fait que les bielles présentent une rigidité à la traction supérieure à la rigidité à la compression.

Comme le treillis est hyperstatique, les efforts transitant dans les bielles sont déterminés par la rigidité entre les différentes bielles. L'invention a donc consisté à disposer des bielles dont la rigidité en compression est plus faible que la rigidité en traction de sorte que les efforts de compression maximaux sont diminués et les efforts de traction maximaux au contraire augmentés. Les marges à la rupture en traction d'une part et au flambage en compression d'autre part peuvent être ainsi fixées indépendamment l'une de l'autre permettant un dimensionnement optimal.

Les bielles conformes à l'invention comprennent une ou plusieurs parties agencées pour pouvoir travailler en compression et en traction, et une ou plusieurs autres parties travaillant uniquement en traction.

On met en oeuvre préférentiellement l'invention avec des bielles comprenant une tige interne et une enveloppe entourant la tige interne, la tige interne étant agencée pour pouvoir travailler à la fois en compression et en traction, l'enveloppe travaillant uniquement en traction.

Cet agencement permet de choisir la meilleure section pour la tige interne optimisant la masse des pièces, indépendamment de toute considération aérodynamique, et de choisir le meilleur profil pour l'enveloppe minimisant sa traînée, indépendamment de toute autre contrainte de forme.

Conformément à un mode de réalisation, la tige interne et l'enveloppe des bielles présentent une paire de surfaces prenant appui l'une sur l'autre uniquement quand une traction est exercée sur la tige interne, les efforts de traction étant transmis entre les deux extrémités à la fois par la tige interne et par l'enveloppe. Le chemin des efforts de compression passe uniquement par la tige interne.

Selon un mode de réalisation, la tige et l'enveloppe sont solidaires l'une de l'autre par une extrémité l'autre extrémité présentant ladite paire de surfaces. Selon un autre mode de réalisation la tige et l'enveloppe sont indépendantes l'une de l'autre entre les mêmes points de fixation, par exemple la tige et enveloppe étant percées pour le passage des axes de fixation de la bielle, l'enveloppe ne travaillant pas en compression grâce à un jeu entre elle et un des deux axes

Selon une variante, les bielles comportent au moins deux paires de surfaces d'appui réparties le long de l'axe de la tige.

On améliore encore la résistance au flambage de la tige interne avec des bielles présentant des moyens d'appui radial contre la surface interne de l'enveloppe, de manière à prévenir le flambage de la tige interne lorsqu'elle soumise à des contraintes de compression.

De préférence, la tige interne présente une section cruciforme.

Selon une autre variante la tige interne est filetée, avec une plaquette mobile axialement et formant les surfaces d'appui, le réglage de la bielle est ainsi plus simple puisque le jeu entre les surfaces d'appui est ajusté par rotation de la tige. En outre, une pré-charge peut être appliquée de sorte à avoir des surfaces d'appui sans jeu.

La solution de l'invention présente notamment l'intérêt de faciliter l'élaboration d'une enveloppe des bielles à profil aérodynamique, puisque celle-ci ne travaille qu'en traction, de sorte que la forme du profil n'entre pas en compte dans le dimensionnement.

Selon une application particulière, le treillis présente six bielles disposées en triangle tangentiellement à l'anneau interne.

Enfin l'invention porte également sur un moteur à soufflante avant comprenant un canal annulaire formant le canal de flux secondaire et un carter d'échappement avec un anneau de carter et un anneau concentrique dans l'enveloppe du canal secondaire, le treillis selon l'une des revendications précédentes assurant la liaison entre les deux anneaux.

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés.
La figure 1 est une vue schématique en perspective d'un turboréacteur à double flux à canal de flux secondaire allongé ;
La figure 2 représente schématiquement une coupe transversale du moteur de la figure 1 montrant les deux anneaux structuraux, l'un du carter d'échappement l'autre du conduit externe du canal de soufflante, reliés par un treillis hyperstatique de six bielles ;
La figure 3 représente, en coupe longitudinale, un premier mode de réalisation d'une bielle du treillis, selon l'invention, les flèches indiquant le chemin des efforts quand la bielle travaille en traction ;
La figure 4 représente la bielle de la figure 3, les flèches indiquant le chemin des efforts quand la bielle travaille en compression ;
La figure 5 est une vue en coupe transversale d'une bielle selon l'invention ;
La figure 6 est une vue en coupe longitudinale d'une première variante de réalisation ;
La figure 7 est une vue en coupe longitudinale d'une autre variante de réalisation ;
La figure 8 est une vue en coupe longitudinale d'une autre variante de réalisation.

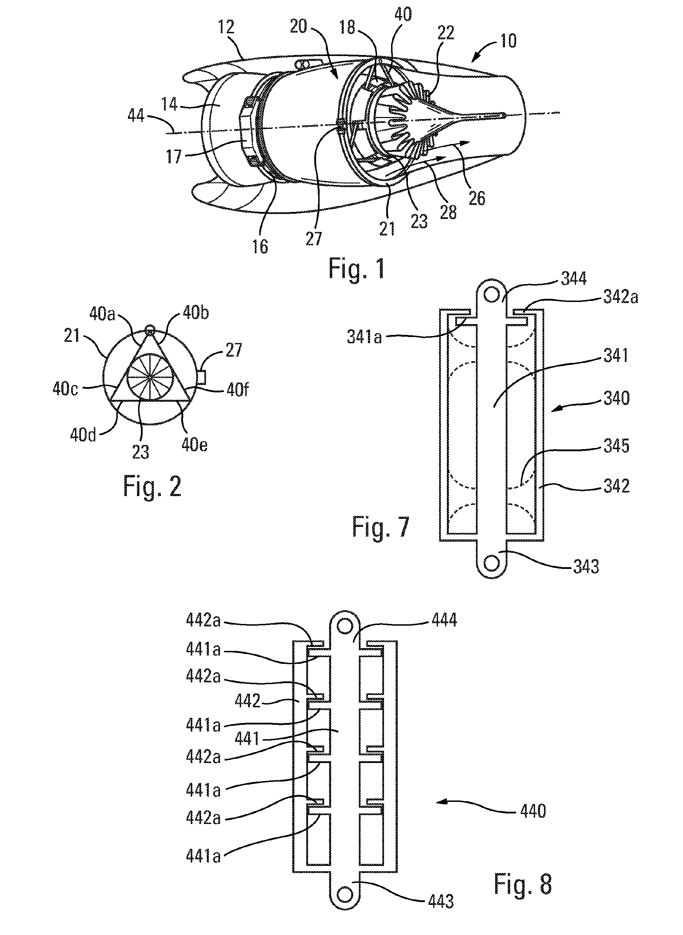

Le turboréacteur 10 de la figure 1 est à double flux à soufflant avant, à l'intérieur d'une nacelle 12 et comprenant de l'amont vers l'aval, un carter de soufflante 14, un carter intermédiaire 16 et un canal de soufflante annulaire ménagé entre deux conduits sensiblement cylindriques : un conduit interne 18 formant l'enveloppe de la partie du moteur parcourue par le flux primaire et formant générateur de gaz, et un conduit externe 20. Le conduit externe 20 du canal de soufflante s'étend ici jusqu'en aval de la zone de confluence entre le flux primaire 26 et le flux secondaire 28 où les deux flux sont mélangés par le mélangeur 22. Le conduit externe 20 du canal de soufflante a une fonction structurale en assurant la reprise des efforts entre le moteur et l'aéronef sur lequel il est monté. Il comprend ainsi un anneau structural 21 relié ici par des bielles 40 à l'anneau externe 23 du carter d'échappement du générateur de gaz. Le moteur est fixé à l'aéronef à l'amont par une attache 17 solidaire du carter intermédiaire et à l'aval par une attache 27 solidaire de l'anneau structural 21 de conduit externe 20 du canal de soufflante.

Dans l'exemple représenté, la liaison entre l'anneau structural 21 du conduit externe de canal de soufflante et l'anneau 23 du carter d'échappement est formée de bielles 40 fixées par les extrémités aux deux anneaux. Chaque fixation comprend comme cela est connu et non représenté, une chape solidaire de l'anneau et une chape solidaire de l'extrémité de la bielle, les deux chapes étant traversées par un axe commun. Comme on le voit sur la figure 2, la liaison est formée plus précisément de trois paires de bielles 40, tangentes à l'anneau 23 de carter d'échappement et convergent par paires sur l'anneau structural 21 externe.

Selon l'art antérieur, en raison notamment du caractère tournant autour de l'axe des charges induites par le balourd, on dimensionne les éléments constituant la liaison entre les anneaux de manière à ce que chacun soit à même de transmettre les efforts aussi bien en compression qu'en traction dans le cas où surviendrait une rupture d'aube de soufflante. Notamment les bielles sont dimensionnées au flambage en compression car elles sont moins résistantes en compression qu'en traction. Un balourd selon une direction est repris en traction par une partie des bielles et en compression par l'autre partie. Dans la mesure où les bielles sont de même rigidité, les efforts se répartissent de la même façon entre elles. Par exemple un effort de 10 T dans une direction doit être transmis aussi bien en compression qu'en traction. Cette situation n'est pas optimale car une bielle présente une marge à la rupture en traction bien au delà de 10 T si elle a été dimensionnée pour absorber une charge maximale en compression de 10T. Cette marge à la rupture n'est pas mise à profit dans les structures de l'art antérieur.

Considérant que, le treillis étant hyperstatique (il l'est dans le plan à partir de trois bielles), les efforts, transitant dans les bielles, sont déterminés par le rapport des rigidités entre les différentes bielles, les bielles constituant le treillis de l'invention ont une rigidité plus faible quand elles travaillent en compression que lorsqu'elles travaillent en traction. Il s'ensuit que les efforts de compression maximaux que doit supporter une bielle peuvent être plus faibles et les efforts de traction maximaux augmentés. Cette dernière condition n'est pas pénalisante car la marge à la rupture en traction est élevée. Autrement dit il est possible de fixer indépendamment l'une de l'autre la marge à rupture en traction et la marge à rupture en compression. C'est là une voie d'optimisation supplémentaire.

On décrit ci-après des exemples non limitatifs de réalisation de bielles présentant une rigidité en traction différente de la rigidité en traction.

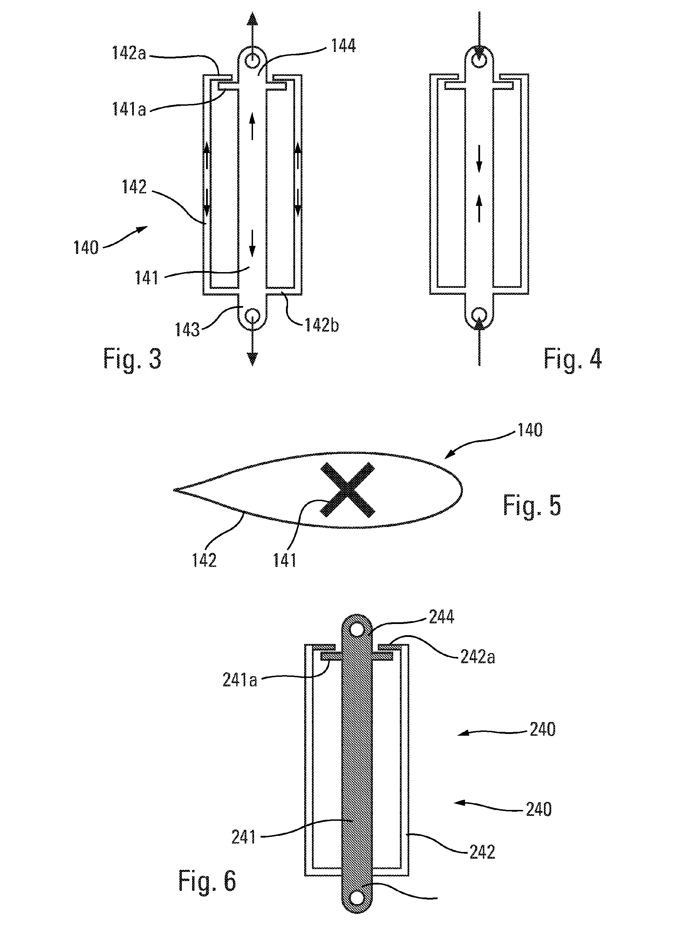

La bielle 140 de la figure 3 est vue en coupe longitudinale. Elle présente une tige interne 141 et une enveloppe 142. La tige interne est pourvue d'une chape à chacune de ses extrémités, 143, respectivement 144. Ces chapes permettent de fixer la bielle aux deux anneaux du moteur. La tige est entourée le long de son axe d'une extrémité à l'autre d'une enveloppe 142 dont le profil perpendiculaire à l'axe de la bielle est aérodynamique comme on le voit sur la figure 5 qui est une vue en coupe transversale. Cette enveloppe est solidaire de la tige à une extrémité, 143. A son autre extrémité, du côté de l'extrémité 144, l'enveloppe comprend une surface d'appui 142a perpendiculaire à l'axe pour une plaque 141 a solidaire de la tige 141. Au repos, les deux surfaces d'appui ne sont pas en contact ; selon un autre mode de réalisation les deux surfaces d'appui sont en contact résultant d'un preserrage entre la tige et l'enveloppe. Lorsqu'un effort de traction est exercé entre les deux extrémités 143 et 144. La surface 141 a prend appui sur la surface 142a de telle sorte que les efforts de traction entre les deux extrémités transitent à la fois par la tige 141 et l'enveloppe 142. La section de bielle qui travaille comprend la section de la tige interne Si et la section de l'enveloppe externe Se.

Lorsque la bielle travaille en compression comme cela est représenté par les flèches d'efforts de la figure 4, les forces transitent d'une extrémité à l'autre par la tige 141 seulement car les deux surfaces 141a et 142a ne sont plus en appui l'une sur l'autre. La section de la bielle qui travaille est Si. On a réalisé ainsi de manière simple une bielle dont la rigidité en traction est différente de celle en compression. Le rapport des rigidités est fonction du rapport (Se+Si)/Si.

Dans le treillis hyperstatique formé de bielles de ce type les charges sont transmises en premier lieu par les bielles les plus rigides, celles qui travaillent en traction et qui présentent une marge à la rupture la plus élevée.

L'avantage de la solution est qu'en faisant travailler l'enveloppe on optimise la masse globale de la bielle puisque la tige peut être allégée. En outre la charge maximale en compression que doit supporter la tige interne peut être fixée à un niveau plus faible puisque les efforts en compression sont toujours plus faibles.
On peut optimiser la forme de la tige interne en tenant compte de la seule contrainte mécanique puisqu'elle ne vient pas au contact de l'air du flux secondaire. La figure 5 montre un exemple de géométrie de la section de la tige pour optimiser sa tenue au flambage ; la forme est en croix.

Pour améliorer encore la résistance au flambage, on prévoit un autre mode de réalisation représenté sur la figure 7. La bielle 340 comporte une tige interne 341 et une enveloppe 342 qui comme la bielle 140 sont reliées par une extrémité 343 et viennent en contact en traction, à l'autre extrémité 344 par des surfaces d'appui 341 a et 342a respectives. Cette bielle comporte en outre des voiles 345 de contact radial entre la tige interne et l'enveloppe. Ces voiles modifient le mode de flambage de la tige interne 341 par le biais des conditions aux limites.

D'autres variantes de réalisations sont illustrées sur les figures 6 et 8.

Sur la figure 6 la tige interne 241 de la bielle 240 est filetée et vient se visser dans l'enveloppe 242. La surface d'appui 241a de la tige 241 contre la surface d'appui 242a de l'enveloppe à l'extrémité 244 est réglable en hauteur par le vissage de la tige dans l'enveloppe. Cette disposition permet un réglage fin au montage des bielles dans le treillis.

Sur la figure 8 une autre variante consiste à ménager plusieurs paires de surfaces d'appui, 441a respectivement 442a, le long de la tige interne 441 à l'intérieur de l'enveloppe 442 entre les deux extrémités 443 et 444.

L'invention n'est pas limitée aux modes de réalisation illustrés dans la présente demande de brevet ; elle englobe les variantes qui sont à la portée de l'homme du métier. Cela inclut les cas où, par exemple, l'enveloppe et la tige ne sont pas disposées l'une dans l'autre, mais côte à côte, par exemple avec une protection aérodynamique en amont et une autre en aval, qui à elles deux constituent la partie travaillant uniquement en traction.

## Revendications

1. Treillis hyperstatique de bielles, appliqué à la suspension d'un premier anneau (23), partie d'un carter de moteur, à l'intérieur d'un second anneau (21) concentrique au premier, les bielles (140 ; 240 ; 340 ; 440) étant fixées par une extrémité au premier anneau (23) et par l'autre extrémité au second anneau (21), les bielles (140 ; 240 ; 340 ; 440) présentant une rigidité à la traction supérieure à la rigidité à la compression et comprenant une ou plusieurs parties (141 ; 241 ; 341 ; 441) agencées pour transmettre entre lesdites extrémités les efforts de compression et de traction **caractérisé en ce qu'** une ou plusieurs autres parties (142 ; 242 ; 342 ; 442) desdites bielles (140, 240, 340, 440) sont agencées pour transmettre entre lesdites extrémités uniquement les efforts de traction.

2. Treillis selon la revendication précédente dont les bielles (140 ; 240 ; 340 ; 440) comprennent une tige interne (141 ; 241 ; 341 ; 441) et une enveloppe (142 ; 242 ; 342 ; 442) entourant la tige interne, la tige interne étant agencée pour pouvoir travailler en compression et en traction, l'enveloppe travaillant uniquement en traction.

3. Treillis selon la revendication précédente dont la tige interne et l'enveloppe des bielles présentent une paire de surfaces (141 a, 142a ; 241 a, 242a ; 341 a, 342a ; 441 a, 442a) prenant appui l'une sur l'autre quand une traction est exercée sur la tige interne, les efforts de traction étant alors transmis entre les deux extrémités par la tige interne et l'enveloppe.

4. Treillis selon la revendication précédente dont les bielles (440) comportent au moins deux paires de surface d'appui répartis le long de l'axe de la tige.

5. Treillis selon l'une des revendications 2 à 4 dont les bielles (340) présentent des moyens d'appui radial (345) contre la surface interne de l'enveloppe, de manière à prévenir le flambage de la tige interne lorsqu'elle est soumise à des contraintes de compression.

6. Treillis selon l'une des revendications 2 à 5 dont la tige interne présente une section cruciforme.

7. Treillis selon l'une des revendications 2 à 6 dont la tige interne (241) est filetée, avec une plaquette mobile axialement et formant les surfaces d'appui.

8. Treillis selon l'une des revendications 2 à 7 dont l'enveloppe (142 ; 242 ; 342 ; 442) des bielles présente perpendiculairement à l'axe des bielles un profil aérodynamique.

9. Treillis selon l'une des revendications précédentes présentant six bielles disposées en triangle tangentiellement au premier anneau (23).

10. Moteur à soufflante avant comprenant un canal annulaire formant le canal de flux secondaire et un carter d'échappement avec un anneau de carter et un anneau concentrique dans l'enveloppe du canal secondaire, le treillis selon l'une des revendications précédentes assurant la liaison entre les deux anneaux.

## Patentansprüche

1. Hyperstatisches Geflecht aus Schubstangen, das auf die Aufhängung eines ersten Ringes (23) als Teil eines Antriebsgehäuses im Inneren eines zweiten Ringes (21), der zu dem ersten konzentrisch ist, aufgebracht wird, wobei die Schubstangen (140; 240; 340; 440) über ein Ende an dem ersten Ring (23) und über das andere Ende an dem zweiten Ring (21) befestigt sind, wobei die Schubstangen (140; 240; 340; 440) eine Zugfestigkeit aufweisen, die höher als die Druckfestigkeit ist, und ein oder mehrere Teile (141; 241; 341; 441) umfassen, die für die Übertragung der Druck- und Zugkräfte zwischen den Enden angeordnet sind, **dadurch gekennzeichnet, dass** ein oder mehrere weitere Teile (142; 242; 342; 442) der Schubstangen (140; 240; 340; 440) für die Übertragung nur der Zugkräfte zwischen den Enden angeordnet sind.

2. Geflecht nach dem vorhergehenden Anspruch, wobei die Schubstangen (140; 240; 340; 440) eine innenliegende Stange (141; 241; 341; 441) und eine Umhüllung (142; 242; 342; 442), welche die innenliegende Stange umgibt, umfassen, wobei die innenliegende Stange dafür vorgesehen ist, unter Druck und unter Zug arbeiten zu können, wobei die Umhüllung nur unter Zug arbeitet.

3. Geflecht nach dem vorhergehenden Anspruch, wobei die innenliegende Stange und die Umhüllung der Schubstangen ein Paar Flächen (141a, 142a; 241 a, 242a; 341 a, 342a; 441a; 442a) aufweisen, die sich aufeinander abstützen, wenn ein Zug auf die innenliegende Stange ausgeübt wird, wobei die Zugkräfte dann über die innenliegende Stange und die Umhüllung zwischen den zwei Enden übertragen werden.

4. Geflecht nach dem vorhergehenden Anspruch, wobei die Schubstangen (440) mindestens zwei Paare Stützflächen aufweisen, die entlang der Achse der Stange verteilt sind.

5. Geflecht nach einem der Ansprüche 2 bis 4, wobei die Schubstangen (340) Mittel zur radialen Abstützung (345) gegen die innenliegende Fläche der Umhüllung aufweisen, so dass das Knicken der innenliegenden Stange verhindert wird, wenn sie Druckkräften ausgesetzt ist.

6. Geflecht nach einem der Ansprüche 2 bis 5, wobei die innenliegende Stange einen kreuzförmigen Querschnitt aufweist.

7. Geflecht nach einem der Ansprüche 2 bis 6, wobei die innenliegende Stange (241) mit Gewinde versehen ist, mit einer Platte, die in axialer Richtung beweglich ist und Abstützflächen bildet.

8. Geflecht nach einem der Ansprüche 2 bis 7, wobei die Umhüllung (142; 242; 342; 442) der Schubstangen lotrecht zu der Achse der Schubstangen ein aerodynamisches Profil aufweist.

9. Geflecht nach einem der vorhergehenden Ansprüche, das sechs Schubstangen aufweist, die tangential zu dem ersten Ring (23) im Dreieck angeordnet sind.

10. Antrieb mit Vordergebläse, umfassend einen ringförmigen Kanal, der den Sekundärstromkanal bildet, und ein Austrittsgehäuse mit einem Gehäusering und einem konzentrischen Ring in der Umhüllung des Sekundärkanals, wobei das Geflecht nach einem der vorhergehenden Ansprüche die Verbindung zwischen den zwei Ringen sicherstellt.

## Claims

1. A hyperstatic truss of connecting rods applied to the suspending of a first ring (23), that forms part of an engine casing, inside a second ring (21) concentric with the first, the connecting rods (140; 240; 340; 440) being secured by one end to the first ring (23) and by the other end to the second ring (21), said connecting rods (140; 240; 340; 440) having a tensile strength that is higher than their compressive strengths, and comprising one or more parts (141; 241; 341; 441) designed to transmit the compressive and tensile loads between said ends, wherein one or more other parts (142; 242; 342; 442) of said rods (140; 240; 340; 440) are designed to transmit only the tensile loads between said ends.

2. The truss as claimed in the preceding claim, the connecting rods (140; 240; 340; 440) of which comprise an internal rod (141; 241; 341; 441) and a shroud (142; 242; 342; 442) surrounding the internal rod, the internal rod being designed to be able to work in compression and in tension, the shroud working only in tension.

3. The truss as claimed in the preceding claim, of which the internal rod and the shroud of the connecting rods have a pair of surfaces (141 a, 142a; 241 a, 242a; 341 a, 342a; 441 a, 442a) bearing against one another when tension is applied to the internal rod, the tensile loads then being transmitted between the two ends by the internal rod and the shroud.

4. The truss as claimed in the preceding claim, in which the connecting rods (440) comprise at least two pairs of bearing surfaces distributed along the axis of the rod.

5. The truss as claimed in one of claims 2 to 4, in which the connecting rods (340) have means (345) of bearing radially against the internal surface of the shroud, so as to prevent the internal rod from buckling when subjected to compressive stress.

6. The truss as claimed in one of claims 2 to 5, in which the internal rod is of cruciform cross section.

7. The truss as claimed in one of claims 2 to 6, in which the internal rod (241) is threaded, with a plate that is axially movable and forms the bearing surfaces.

8. The truss as claimed in one of claims 2 to 7, in which the shroud (142; 242; 342; 442) of the connecting rods has an aerodynamic profile perpendicular to the axis of the connecting rods.

9. The truss as claimed in one of the preceding claims, having six connecting rods arranged in a triangle tangentially to the first ring (23).

10. A front fan engine comprising an annular duct forming the bypass duct and an exhaust casing with a casing ring and a concentric ring in the shroud of the bypass duct, the truss as claimed in one of the preceding claims providing the connection between the two rings.
